# EUROPEAN PATENT APPLICATION

(11) **EP 4 799 780 A1**
(43) Date of publication of application: **02.09.2026**
(21) Application number: 26154857.2
(22) Date of filing: 28.01.2026
(51) Int. Cl.: B28B 3/00, B28B 7/32, B28B 23/00, B29C 70/86, B29D 99/00, C04B 35/565, C04B 35/80, F01D 5/14, F01D 5/28

(54) **CAVITY CONSOLIDATION APPARATUS**

(30) Priority: 26.02.2025 US 202519063422
(71) Applicant: General Electric Company, Cincinnati, Ohio 45215 (US)
(72) Inventor: MCNULTY, Thomas Francis, Niskayuna, 12309 (US)
(74) Representative: Openshaw & Co.

(57) **Abstract**

A cavity consolidation apparatus for consolidating a preform (12) of a ceramic matrix composite (CMC) component (10) defining a cavity (14) includes a pressurization device (32) and an expandable band (34) wrapped around the pressurization device (32), wherein the expandable band (34) has a first band portion (40) with a first thickness in a first region (18) of the cavity (14) and a second band portion (42) with a second thickness in a second region (22) of the cavity (14), wherein the first thickness of the expandable band (34) is different from the second thickness of the expandable band (34).

## Description

### FIELD

The present disclosure relates to a cavity consolidation apparatus for a ceramic matrix composite (CMC) component.

### BACKGROUND

Gas turbine engines feature several components manufactured with CMCs. CMCs provide high temperature capability useful in aerospace applications. Examples of CMC components include turbine blades, nozzles, and shrouds. Within a turbine engine, a nozzle is formed of a plurality of airfoils joined to bands.

Typically, CMC materials include ceramic fibers embedded in a matrix material such as silicon carbide (SiC), silicon, silica, alumina, or combinations thereof. Plies of the CMC material may be laid up to form a preform component that may then undergo thermal processing, such as a cure or burn-out to yield a high char residue in the preform, and subsequent chemical processing, such as melt-infiltration with silicon, to arrive at a component formed of a CMC material having a desired chemical composition.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic, cross-sectional view of a preform of a CMC component.
FIG. 2 is a schematic, cross-sectional view of a cavity consolidation apparatus disposed in the preform of FIG. 1.
FIG. 3A is a magnified side view of an expandable band of the cavity consolidation apparatus of FIG. 2 in an unexpanded position.
FIG. 3B is a magnified side view of the expandable band of the cavity consolidation apparatus of FIG. 2 in an expanded position.
FIG. 4 is a block diagram of a method for consolidating the CMC component of FIG. 1.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first," "second," "third," and other ordinals are used to distinguish one component from another and are not intended to signify location or importance of the individual components.

As used herein, "CMC" refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled and/or coated prior to inclusion within the ceramic matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform.

The preform may then undergo thermal processing, and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer. The present disclosure is generally related to consolidating complex CMC components. Typical lay-up processes use lamination of CMC tapes onto a net shape inner mandrel to form a preform that is enlarged compared to an outer surface of a compaction tool due to layup bulk. Compaction pressure from the tool puts the preform under compressive stress, which may cause microstructural effects.

Using an apparatus with a variable thickness that is expanded from an internal cavity of the preform provides proportionate compaction of the preform. In particular, an expandable band provides additional expansion to regions of the preform that require higher displacement and less expansion to regions of the preform that require relatively little displacement, resulting in a consistent, proportionate compaction of the preform. The proportionate compaction of the preform from the apparatus results in less stress during consolidation and fewer microstructural effects in the final CMC component.

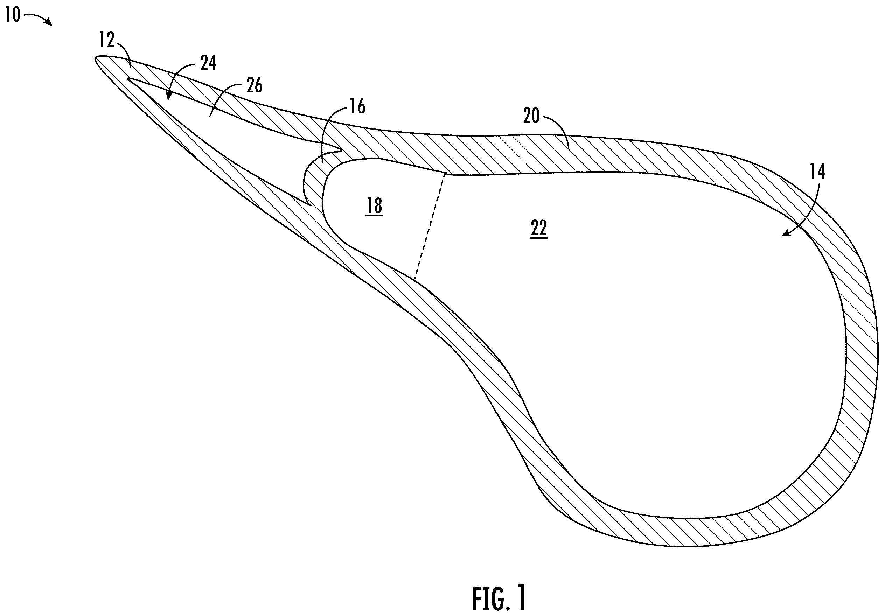

Referring now to the drawings, wherein identical numerals indicate the same elements throughout the figures, FIG. 1 is a cross-sectional, top-down view of a preform of an exemplary component 10. The component 10 may be used in an aircraft, such as an airfoil for a turbine. The component 10 is formed of a composite material, such as a CMC material described above. Such CMC components 10 are constructed by laying plies into a preform 12 and then consolidating the preform 12 into the component. The preform 12 contains layup bulk that may include a volatile solvent. The consolidation may include a heating process, such as autoclaving to consolidate the preform 12 into the finished component 10.

The preform 12 defines a cavity 14. The cavity 14 allows solid portions of the preform 12 to compact during the consolidation process (i.e., to contract and densify). A thickness of the preform 12 differs for different portions of the preform 12, such that the different portions of the preform 12 compact at different magnitudes. For example, a first preform portion 16 of the preform 12 has a first thickness adjacent to a first region 18 of the cavity 14 and a second preform portion 20 has a second thickness adjacent to a second region 22 of the cavity 14, and the first thickness is different than the second thickness. In FIG. 1, the first thickness is smaller than the second thickness, and during the consolidation process, the first preform portion 16 compacts less than the second preform portion 20. In general, the amount of compaction correlates to the magnitude of the thickness of the preform 12, such that thinner portions of the preform 12 compact less than thicker portions.

The preform 12 may include a second cavity 24 and an insert 26 disposed in the second cavity 24. To form the airfoil shape of the component, the insert 26 reduces compaction of the portions of the preform 12 around the second cavity 24, maintaining the shape of the component 10. The insert 26 is rigid and does not compact during the consolidation process, and the insert 26 improves mechanical strength of the finished component 10.

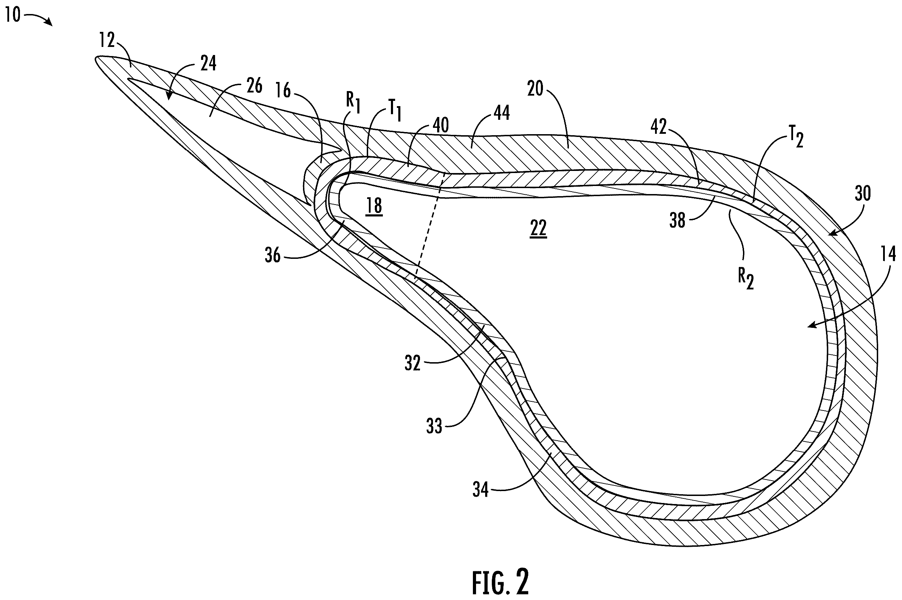

Now referring to FIG. 2, a cross-sectional, top-down view of an exemplary cavity consolidation apparatus 30 disposed in the cavity 14 is provided. The cavity consolidation apparatus 30 provides pressure to the preform 12 to reduce variations in compaction of the preform 12 caused by the different thicknesses of the preform 12. The cavity consolidation apparatus 30 includes a pressurization device 32 defining an outer surface 33 and an expandable band 34 wrapped around the outer surface 33 of the pressurization device 32 to impart pressure on the interior of the preform 12. In this context, the expandable band 34 is "wrapped" around the outer surface 33 of the pressurization device 32 because the expandable band 34 is a flexible component that can be attached to the outer surface 33 in coiled or wound arrangement. In such a form, the expandable band 3 is sandwiched between the pressurization device 32 and the preform 12.

The exemplary pressurization device 32 is a structure that receives a fluid and elastically expands (i.e., is inflatable) upon inflation from an uninflated position to an inflated position, such as a pneumatic bladder or a hydraulic bladder. The pressurization device 32 provides proportionate pressure onto the inner surface of the expandable band 34, which in turn expands non-proportionately, but in proportion to the specified local displacement of preform 12.

In general, with a pressurization device 32 alone, the localized displacement of the inner surface of preform 12 may deviate from a specified local displacement. As such, when the first preform portion 16 of the preform 12 is thinner than the second preform portion 20 of the preform 12, the first preform portion 16 may compact more as a percentage of a total thickness of the first preform portion 16 than the second preform portion 20 compacts. In such a form, the shape of the cavity 14 of the consolidated CMC component 10 differs than the shape of the unconsolidated preform 12, inducing mechanical stresses. To consolidate the preform 12 to a specified final shape of the consolidated CMC component 10, the consolidation should be "proportionate," i.e., the preform 12 should consolidate a same percentage of its thickness throughout the entirety of the preform 12. The pressure provided by the pressurization device 32 and the expandable band 34 provide a "proportionate compaction" of the preform 12, i.e., the cavity consolidation apparatus 30 provides more displacement to thicker portions of the preform 12 and less displacement to thinner portions of the preform 12 so that the total compaction of the preform 12 is proportionate. The proportionate compaction reduces or inhibits mechanical stresses that occur from uneven consolidation and improves matching of dimensional tolerances of the cavity 14.

The expandable band 34 is arranged to expand into the first region 18 of the cavity 14 and into the second region 22 of the cavity 14 from pressure applied by the pressurization device 32. The curvature of the pressurization device 32 varies such that a first amount of expansion of the pressurization device 32 into the first region 18 is greater than a second amount of expansion of the pressurization device 32 into the second region 22. That is, the pressurization device 32 has a constant thickness, so the total expansion is determined based on the curvature of portions of the pressurization device 32. As an example, a first portion 36 of the pressurization device 32 has a first radius of curvature *R*₁, and a second portion 38 of the pressurization device 32 has a second radius of curvature *R*₂. The first radius of curvature *R*₁ is less than the second radius of curvature *R*₂, so when the pressurization device 32 is heated, the first portion 36 has more resistance to expansion and expands less than the second portion 38.

To provide the pressure to the preform 12, the expandable band 34 has a first band portion 40 with a first thickness *T*₁ in the first region 18 of the cavity 14 and a second band portion 42 with a second thickness *T*₂ in the second region 22 of the cavity 14. The first thickness *T*₁ of the expandable band 34 is different from the second thickness *T*₂ of the expandable band 34, and in particular, the first thickness *T*₁ of the expandable band 34 is greater than the second thickness *T*₂ of the expandable band 34. The thickness of the expandable band 34 varies according to the thickness of the preform 12 and the curvature of the cavity 14 to provide proportionate consolidation. That is, because the pressurization device 32 applies uniform pressure to the inner surface of expandable band 34, the first and second thicknesses *T*₁, *T*₂ of the expandable band 34 are determined such that localized displacement is proportional to the thickness of preform 12.

The expandable band 34 is expandable to a position in which the expandable band 34 provides a proportionate compaction of the preform 12. In the expanded position, the first band portion 40 expands into the first region 18 of the cavity 14 and presses against the preform 12, compacting the first preform portion 16 to the proportionate compaction. The second band portion 42 expands into the second region 22 of the cavity 14, compacting the second preform portion 20 to the proportionate compaction.

The first preform portion 16 defines a corner 44 with the second preform portion 20. The corner 44 is adjacent to the first and second regions 18, 22 of the cavity 14. The first band portion 40 abuts the first preform portion 16 at the corner 44, and the second band portion 42 abuts the second preform portion 20 at the corner 44. In such a form, the second band portion 42 expands more than the first band portion 40. In particular, the first thickness *T*₁ is determined to reduce expansion of the pressurization device 32 toward the corner 44, providing the proportionate compaction along the corner 44.

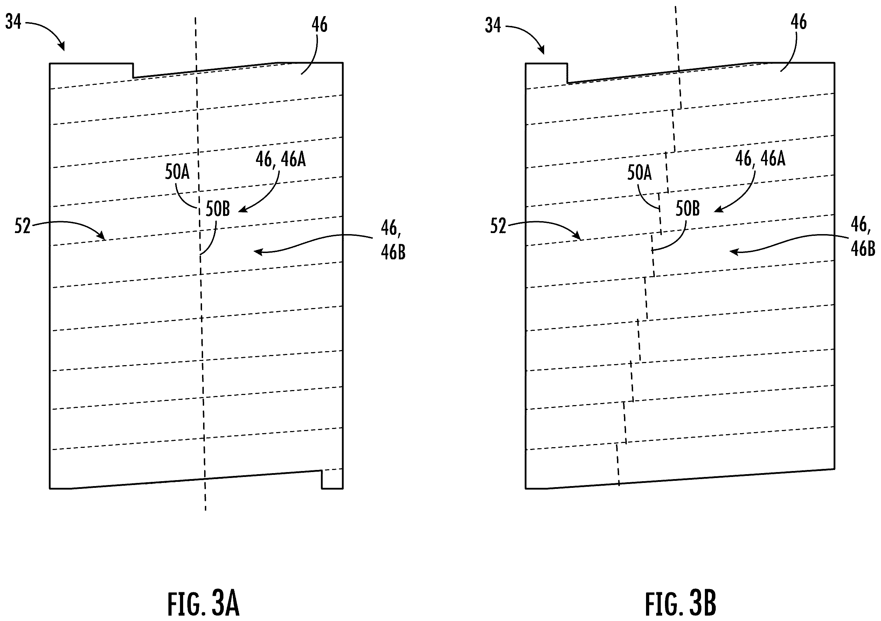

With reference to FIGS. 3A-3B, side views of a portion of the expandable band 34 of FIG. 2 are provided. FIG. 3A is a side view of the expandable band 34 in an unexpanded position. FIG. 3B is a side view of the expandable band 34 in an expanded position.

The expandable band 34 is wrapped around the outer surface 33 of the pressurization device 32 (FIG. 2) in a coiled arrangement such that the expandable band 34 defines a plurality of segments 46 movable relative to each other. The plurality of segments 46 include a first segment 46A and a second segment 46B adjacent to the first segment 46A. The expandable band 34 in FIG. 3A is shown in the unexpanded position, and the first segment 46A abuts the second segment 46B. The first segment 46A defines a reference line 50A that aligns with a reference line 50B defined by the second segment 46B. The reference lines 50A, 50B are datums that indicate how the expandable band 34 expands between Figures 3A-3B.

When the expandable band 34 is in the expanded position, as shown in FIG. 3B, the first segment 46A moves relative to the second segment 46B such that the reference line 50A no longer aligns with the reference line 50B. That is, the first segment 46A shifts horizontally relative to the second segment 46B along a line of contact 52 between the first segment 46A and the second segment 46B. In the expanded position, the expandable band 34 maintains surface contact with the preform 12 as the preform 12 consolidates during heating. The pitch of the line of contact 52 can vary depending on the complexity of the shape of the cavity 14.

The expandable band 34 may be a suitable material that allows for controlled expansion and pressure distribution. As an example, the expandable band 34 may be a malleable metal such as copper or aluminum to reduce resistance to expansion.

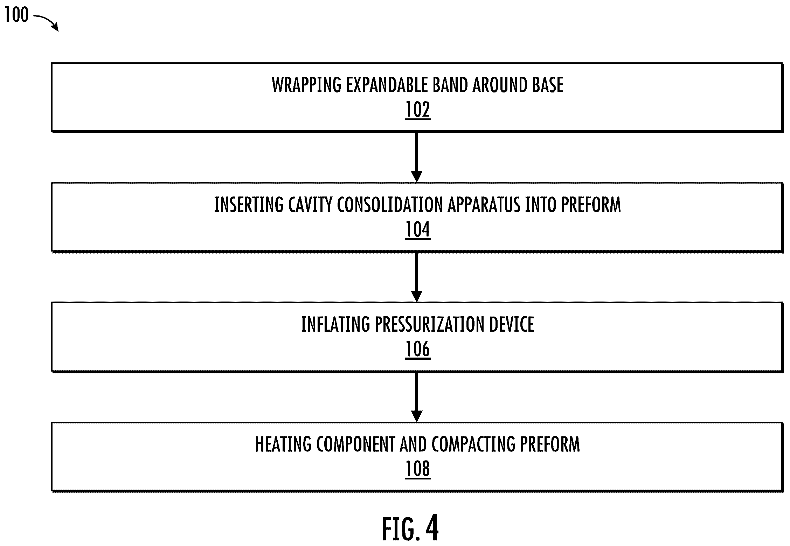

Now referring to FIG. 4, a block diagram of an exemplary method for consolidating a CMC component is provided. The method 100 includes at (102) wrapping an expandable band around a pressurization device to form a cavity consolidation apparatus. The expandable band has a first thickness adjacent a first portion of the pressurization device and a second thickness adjacent a second portion of the pressurization device, and the first thickness is different than the second thickness. The expandable band is wrapped in a coiled arrangement defining a plurality of segments adjacent to each other.

The method 100 includes at (104) inserting the cavity consolidation apparatus into a cavity of a preform of the CMC component. In particular, the cavity consolidation apparatus is arranged in the cavity such that the first thickness of the expandable band is in a first region of the cavity and the second thickness of the expandable band is in a second region of the cavity.

The method 100 includes at (106) inflating the pressurization device to provide a proportionate compaction of the preform. As described above, the proportionate compaction is an equal percentage of a thickness of the preform. Because the first thickness of the expandable band is different than the second thickness of the expandable band, the expandable band expands in a nonproportionate manner to account for the nonproportionate natural compaction of the preform.

The method 100 includes at (108) heating the preform and the cavity consolidation apparatus to compact the preform. In particular, heating the preform and the cavity consolidation apparatus increases a volatility of a solvent contained in the preform and reduces a viscosity of a matrix phase of the CMC material. It will be appreciated that the step (108) may be omitted from the method 100.

Further aspects are provided by the subject matter of the following clauses:

A cavity consolidation apparatus for consolidating a preform of a ceramic matrix composite (CMC) component defining a cavity, the apparatus including a pressurization device and an expandable band wrapped around the pressurization device, wherein the expandable band has a first band portion with a first thickness in a first region of the cavity and a second band portion with a second thickness in a second region of the cavity, wherein the first thickness of the expandable band is different from the second thickness of the expandable band.

The apparatus of any preceding clause, wherein the expandable band is wrapped around the pressurization device in a coiled arrangement.

The apparatus of any preceding clause, wherein the expandable band includes a plurality of segments, each of the plurality of segments movable relative to each other of the plurality of segments in the coiled arrangement.

The apparatus of any preceding clause, wherein the expandable band is expandable to an expanded position in which the expandable band provides a proportionate compaction of the preform, the proportionate compaction being an equal percentage of a thickness of the preform.

The apparatus of any preceding clause, wherein the first thickness and the second thickness are determined such that the expandable band and the pressurization device provide a proportionate compaction to the preform upon pressurization of the pressurization device, the proportionate compaction being an equal percentage of a thickness of the preform.

The apparatus of any preceding clause, wherein the preform defines a corner adjacent to the first region of the cavity, and wherein the first thickness of the expandable band is greater than the second thickness of the expandable band.

The apparatus of any preceding clause, wherein the first thickness is determined to reduce expansion of the pressurization device toward the corner.

The apparatus of any preceding clause, wherein the preform has a first thickness adjacent to the first region of the cavity and a second thickness adjacent to the second region of the cavity, wherein the first thickness of the preform is different than the second thickness of the preform.

The apparatus of any preceding clause, wherein the first thickness of the preform is smaller than the second thickness of the preform, and wherein the first thickness of the expandable band is greater than the second thickness of the expandable band.

The apparatus of any preceding clause, wherein the preform has a first preform portion adjacent to the first region of the cavity, and the expandable band compacts the first preform portion in the expanded position.

The apparatus of any preceding clause, wherein the pressurization device is inflatable to an inflated position in which the first band portion of the expandable band compacts a first preform portion and the second band portion of the expandable band compacts a second preform portion.

The apparatus of any preceding clause, wherein the pressurization device has a first portion defining a first radius of curvature and a second portion defining a second radius of curvature, wherein the first radius of curvature is different from the second radius of curvature.

The apparatus of any preceding clause, wherein the pressurization device is one of a pneumatic bladder or a hydraulic bladder.

The apparatus of any preceding clause, wherein the CMC component further defines a second cavity.

The apparatus of any preceding clause, further comprising an insert disposed in the second cavity.

The apparatus of any preceding clause, wherein the expandable band is a malleable material including one of copper or aluminum.

The apparatus of any preceding clause, wherein the expandable band defines a first segment and a second segment adjacent to the first segment.

The apparatus of any preceding clause, wherein the first segment defines a first reference line and the second segment defines a second reference line.

The apparatus of any preceding clause, wherein, when the expandable band is in the unexpanded position, the first reference line aligns with the second reference line.

The apparatus of any preceding clause, wherein, when the expandable band is in the expanded position, the first reference line shifts horizontally relative to the second reference line along a line of contact between the first segment and the second segment.

A method for consolidating a ceramic matrix composite (CMC) component, the method including wrapping an expandable band around a pressurization device such that the expandable band has a first band portion having a first thickness adjacent a first portion of the pressurization device and a second band portion having a second thickness adjacent a second portion of the pressurization device, the first thickness being different than the second thickness, inserting the pressurization device and the expandable band into a cavity of a preform of the CMC component such that the first thickness is in a first region of the cavity and the second thickness is in a second region of the cavity, and inflating the pressurization device to provide a proportionate compaction of the preform, the proportionate compaction being an equal percentage of a thickness of the preform.

The method of any preceding clause, wherein wrapping the expandable band around the pressurization device further includes wrapping the expandable band in a coiled arrangement.

The method of any preceding clause, wherein the expandable band includes a plurality of segments, each of the plurality of segments movable relative to each other of the plurality of segments in the coiled arrangement.

The method of any preceding clause, wherein inflating the pressurization device further includes expanding the expandable band to an expanded position in which at least one of the plurality of segments shifts horizontally relative to another of the plurality of segments.

The method of any preceding clause, wherein the preform defines a corner adjacent to the first region of the cavity, wherein the first thickness of the expandable band is greater than the second thickness of the expandable band, and wherein inflating the pressurization device further includes expanding the expandable band around the corner.

The method of any preceding clause, further including compacting a first preform portion with a first band portion of the expandable band having the first thickness and compacting a second preform portion with a second band portion of the expandable band having the second thickness.

The method of any preceding clause, further including heating the preform and the pressurization device to compact the preform.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A cavity consolidation apparatus for consolidating a preform (12) of a ceramic matrix composite (CMC) component (10) defining a cavity (14), the apparatus comprising:
a pressurization device (32); and
an expandable band (34) wrapped around the pressurization device (32);
wherein the expandable band (34) has a first band portion (40) with a first thickness in a first region (18) of the cavity (14) and a second band portion (42) with a second thickness in a second region (22) of the cavity (14),
wherein the first thickness of the expandable band (34) is different from the second thickness of the expandable band (34).

2. The apparatus of claim 1, wherein the expandable band (34) is wrapped around the pressurization device (32) in a coiled arrangement.

3. The apparatus of any of the preceding claims, wherein the expandable band (34) includes a plurality of layers (46), each of the plurality of layers (46) movable relative to each other of the plurality of layers (46) in the coiled arrangement.

4. The apparatus of any of the preceding claims, wherein the expandable band (34) is expandable to an expanded position in which the expandable band (34) provides a proportionate compaction of the preform (12), the proportionate compaction being an equal percentage of a thickness of the preform (12).

5. The apparatus of any of the preceding claims, wherein the first thickness and the second thickness are determined such that the expandable band (34) and the pressurization device (32) provide a proportionate compaction to the preform (12) upon pressurization of the pressurization device (32), the proportionate compaction being an equal percentage of a thickness of the preform (12).

6. The apparatus of any of the preceding claims, wherein the preform (12) defines a corner (44) adjacent to the first region (18) of the cavity (14), and wherein the first thickness of the expandable band (34) is greater than the second thickness of the expandable band (34).

7. The apparatus of any of the preceding claims, wherein the first thickness is determined to reduce expansion of the pressurization device (32) toward the corner (44).

8. The apparatus of any of the preceding claims, wherein the preform (12) has a first thickness adjacent to the first region (18) of the cavity (14) and a second thickness adjacent to the second region (22) of the cavity (14), wherein the first thickness of the preform (12) is different than the second thickness of the preform (12).

9. The apparatus of any of the preceding claims, wherein the first thickness of the preform (12) is smaller than the second thickness of the preform (12), and wherein the first thickness of the expandable band (34) is greater than the second thickness of the expandable band (34).

10. The apparatus of any of the preceding claims, wherein the preform (12) has a first preform portion (16) adjacent to the first region (18) of the cavity (14), and the expandable band (34) compacts the first preform portion (16) in the expanded position.

11. The apparatus of any of the preceding claims, wherein the pressurization device (32) is inflatable to an inflated position in which the first band portion (40) of the expandable band (34) compacts a first preform portion (16) and the second band portion (42) of the expandable band (34) compacts a second preform (12) portion.

12. The apparatus of any of the preceding claims, wherein the pressurization device (32) has a first portion (36) defining a first radius of curvature and a second portion (38) defining a second radius of curvature, wherein the first radius of curvature is different from the second radius of curvature.

13. The apparatus of any of the preceding claims, wherein the pressurization device (32) is one of a pneumatic bladder or a hydraulic bladder.

14. A method (100) for consolidating a ceramic matrix composite (CMC) component (10), the method (100) comprising:
wrapping an expandable band (34) around a pressurization device (32) such that the expandable band (34) has a first band portion (40) having a first thickness adjacent a first portion (36) of the pressurization device (32) and a second band portion (42) having a second thickness adjacent a second portion (38) of the pressurization device (32), the first thickness being different than the second thickness;
inserting the pressurization device (32) and the expandable band (34) into a cavity (14) of a preform (12) of the CMC component (10) such that the first thickness is in a first region (18) of the cavity (14) and the second thickness is in a second region (22) of the cavity (14); and
inflating the pressurization device (32) to provide a proportionate compaction of the preform (12), the proportionate compaction being an equal percentage of a thickness of the preform (12).

15. The method (100) of claim 14, further comprising heating the preform (12) and the pressurization device (32) to compact the preform (12).
